# EUROPEAN PATENT APPLICATION

(11) **EP 0 709 176 A2**
(43) Date of publication of application: **01.05.1996**
(21) Application number: 95307503.3
(22) Date of filing: 23.10.1995
(51) Int. Cl.: B29C 47/66

(54) **Backpressure control device for twin screw extruder**

(30) Priority: 24.10.1994 US 327764
(71) Applicant: ROHM AND HAAS COMPANY, Philadelphia, Pennsylvania 19106-2399 (US)
(72) Inventor: Jerman, Robert Edward, Chalfont, Pennsylvania 18914 (US)
(74) Representative: Angell, David Whilton

(57) **Abstract**

An extruder wherein the extruder bores are non-communicating with one another for at least a portion of the length of the extruder bores and a process employing the same.

## Description

This invention relates to an apparatus for working material. More particularly, this invention relates to a non-intermeshing, co or counter rotating twin screw extruder wherein leakage of pressure is minimized between a high pressure region in the extruder and an adjacent region of lower pressure.

### Background Of The Invention

In an apparatus for working a material, usually referred to as an extruder, the extruder may be of the type wherein twin co or counter rotating non-intermeshing screws are disposed within two barrel bores. The extruder is generally divided into sections or zones for the performance of different operations. For example, there is a feed section wherein material fed into the extruder is conveyed into a second section which may be a mixing section or a section wherein a reaction takes place. Sectioning is generally achieved, especially in those instances which require zones of differing pressures, by the placement of flow restriction means between the zones. Many times, it is necessary to have the reaction section under a positive pressure in order to promote the reaction of material. Thereafter, the reacted materials are then passed to an area of lower pressure wherein undesirable liquids and volatiles are released from the reaction mixture. The construct of the extruder is such that between the barrel bores, wherein the screws are placed, there is a channel or opening which may function as a conduit for the fluid being treated allowing exchange and mixing between screws.

One way in which the pressure is maintained in the reaction section is to have a flow restriction means on each screw between the high pressure zone and a low pressure zone. The material being treated will flow against this restriction means thereby creating substantial back pressure. The magnitude of this back pressure determines the pressure differential between the upstream high pressure zone and the downstream low pressure zone. Unfortunately, because of the channel between the barrel bores, there is considerable pressure leakage between the high pressure zone and the low pressure zone. This leakage diminishes the capacity of the restrictions on the screws to maintain a pressure differential between the high and low pressure zones.

This pressure leakage results in the material in the high pressure zone being at a pressure which is not as great as desired. In some reactions, conducted within a high pressure zone, because of the pressure leakage from the high pressure zone to the low pressure zone, raw material usage is greatly increased to obtain the amount of product which would have been obtained if the pressure in the high pressure zone could have been maintained at a constant higher level.

U.S. Patent 2,615,199 discloses a means for obtaining a high pressure when working a material in an extruder. However, U.S. 2,615,199 fails to teach or suggest any means for preventing loss of pressure between a high pressure area and a low pressure area due to the channels between the barrel bores. These channels are generally referred to as the "nip" or "apex" between the barrel bores. In general, for non-intermeshing twin screw extruders, it is standard that the distance from one barrel bore center to the other barrel bore center is equal to the diameter of the barrel bore itself.

It is an object of this invention therefore to provide a means for maintaining a high back pressure in a non-intermeshing parallel or tangential co or counter rotating twin screw extruder.

Another object of this invention is to provide a process for processing material at a high pressure wherein pressure loss from a high pressure zone to an adjacent zone of lower pressure, is minimized.

A further object of this invention is to provide a device which will enable the operator to establish a higher pressure drop between adjacent extruder zones than may be achieved in conventional barrel sections.

Other objects and advantages will become apparent from the following more complete description and claims.

### A Brief Description Of The Drawings

Figure 1 is a top planar cross section of a non-intermeshing twin screw extruder with equal bore diameters and a nip region between the screws fitted with a region where there is no nip region between the screws.

Figure 2 is a cross sectional view of the extruder in Figure 1 taken upstream of the non-communicating portion of the barrel.

Figure 3 is a cross sectional view of the same twin screw extruder taken at the section of reduced bores with no nip region between the screws.

Figure 4 is a cross sectional view of the same twin screw extruder taken downstream of the non-communicating portion of the barrels.

Figure 5 is a top planar cross section of a non-intermeshing twin screw extruder with equal bore diameters and a nip region between the screws fitted with a region where there is no nip region between the screws. The closed nip portion extends upstream from the seal to the pumping sections of the screws.

Figure 6 is a cross section of the barrel bores from Figure 5 showing the closed nip region.

Figure 7 is a cross section of the barrel bores from Figure 5 showing the normal open nip region.

Figure 8 is a cross section of a non-intermeshing twin screw extruder fit with two removable plugs filling in the nip region.

Figure 9 is a view of the cross section of the plugs cut parallel to the major axes of the screws.

Figure 10 is a top planar cross section view of the removable plugs showing the closed nip region.

### Summary Of The Invention

Broadly, this invention contemplates an apparatus for treating material fed therein comprising a housing having two congruent bores extending through said housing, an inlet extending through said housing and into at least one of said congruent bores, a pair of non-intermeshing parallel or tangential co or counter rotating twin screws, each disposed within one of said bores, means connected operably to said screws for turning said screws, said screws having flow restricting means disposed on each of said screws, said bores communicating with one another for less than the full length of the bores and being non-communicating with one another for the remainder of the length of the bores, and an outlet in said apparatus for discharging material fed to and worked in said apparatus.

This invention also contemplates a process for treating material in an extruder comprising the steps of introducing material into a reaction or mixing zone of an extruder having twin non-intermeshing co or counter rotating screws arranged parallel or tangential to one another and flow restriction means separating the mixing or reaction zone from a lower pressure zone downstream of the flow restricting means, moving material from the reaction or mixing zone into a zone where material on one screw cannot mix with material in the other screw because of non-communicating screw bores, and discharging material from said extruder through a discharge outlet.

In the invention the non-communicating portion of the bores should be, at least in part, coextensive with the flow restriction means for effective opeation of the system.

### Detailed Description

Material is introduced into the extruder through the inlet (2). The feed section (4) of the screws (6) and (7) then convey the material past each of the flow restricting means (8) and (10) into a screw reaction or mixing zone (12). The material is worked in the reaction or mixing zone (12) by the mixing or reaction screw sections (14) and (15) under a desired temperature and pressure. The mixing or reaction screw sections convey the materials toward flow restricting means (16) and (18) which create a back pressure. Pressure leakage from the reaction or mixing zone is minimized due to the close tolerances of the flow restricting means (16) and (18) with the walls of the barrel bores (22). Pressure leakage is also minimized due to the elimination of the nip or apex region between the barrel bores (24). When material is conveyed past the flow restricting means and into a downstream screw section (20), the pressure drop between the reaction or mixing section and the downstream section is much greater than if the nip or apex had not been eliminated.

Any flow restriction means may be used to create back pressure. For example, one may use a smooth cylinder, known as a compounder. Other flow restriction means may also be used such as a screw having reverse feed flights (not shown) to create the desired back pressure. Flow restriction means for extruders are well known in the art and the invention is not to be construed as limited to any particular flow restriction means.

The fluid upstream of the flow restricting means is pressurized by the pumping action of the screws. Taking advantage of this pressure, the fluid may then be driven into a section (25) of the extruder wherein the bores are non-communicating. By the term "non-communicating" is meant that each of the two bores have an endless perimeter, for example, they are cylindrical in shape.

There may be more than one section of the extruder which has non-communicating bores. For example, one or more sections of the extruder, downstream of the feed bore mixing section, may have non-communicating bores. Thus, the non-communicating bores may be discontinuous along the length of the extruder. The communicating portion of the bores may themselves have different bore diameters.

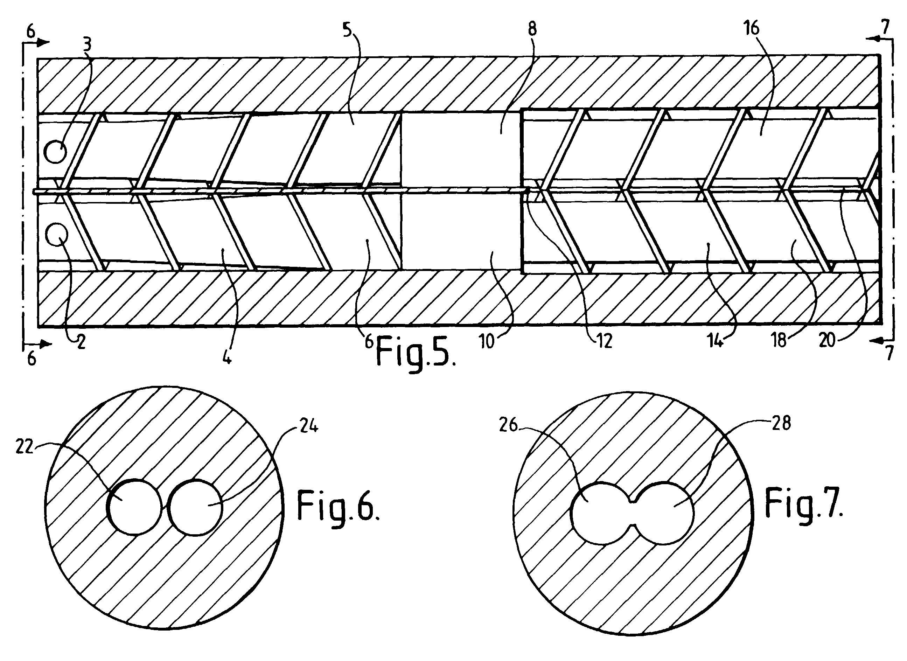

Figure 5 is an example of an extruder with the non-communicating bores extending upstream of the seal into the pumping section of the screws. Material is introduced into the extruder through inlets (2) and (3) wherein it is conveyed into an upstream zone (4) consisting of pumping screws (5) and (6). Pumping screws (5) and (6) convey and pressurize the fluid to the flow restricting means (8) and (10) which create backpressure. Both the pumping screws (5) and (6) and the flow restricting means (10) and (12) are separated from one another by the non-communicating bore (12) which ends as the fluid enters the downstream zone (14). The bore diameters (22) and (24) in Figure 6 in the upstream zone (4) are of a somewhat smaller diameter than those (26) and (28) in Figure 7 in the downstream zone (14) to allow for the nip to be filled in. Fluid passing over the flow restriction means (10) and (8) is then transferred to the downstream conveying screws (16) and (18) which have a communicating nip (20) between them. Cross sections in the non-communicating and communicating portion of the barrel are shown in Figures 6 and 7.

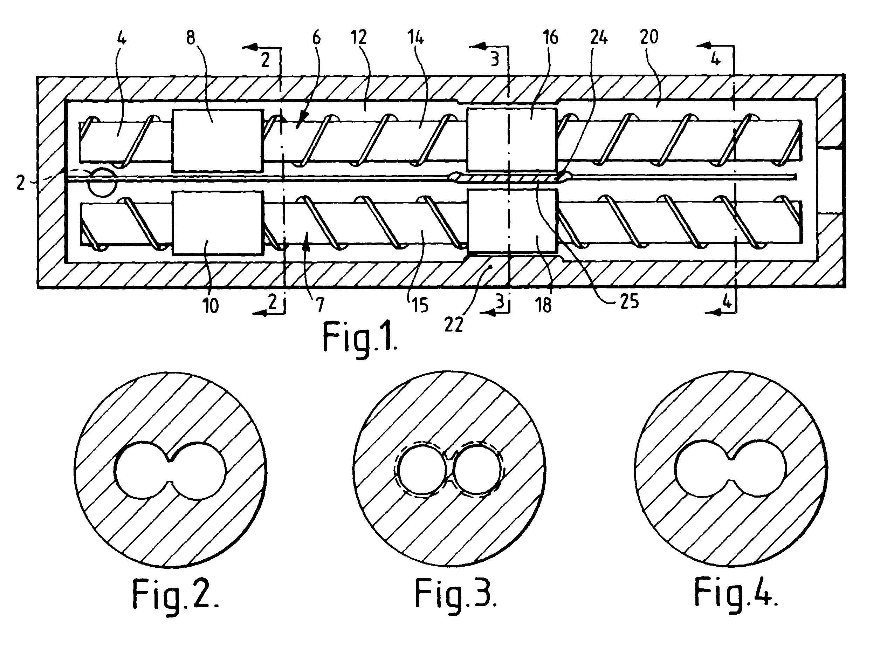

Eliminating the nip in the middle of an extruder as illustrated in Figures 1 through 4 poses some practical challenges in that it requires a slight reduction in barrel bore diameter to allow the nip to be filled in with sufficient thickness as to afford the physical strength required for such an application. To maintain the larger diameter on either side of the non-communicating region requires either a removable portion of the barrel or that the screws be assembled with access to both ends of the extruder. While both methods are practical, the former is more flexible.

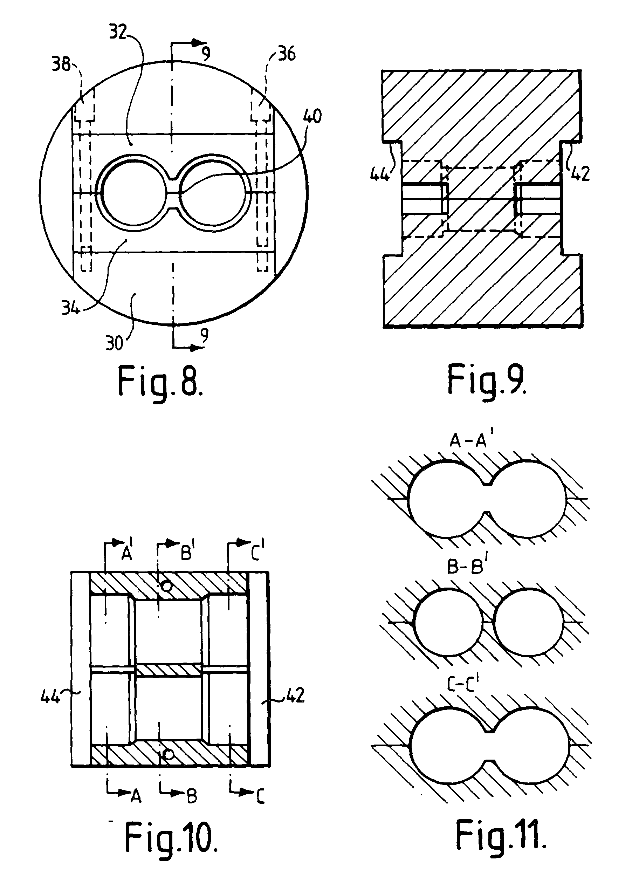

Figure 8 illustrates one possible design for a removable barrel segment that would allow use of a reduced diameter bore in the middle of the machine. It is important to note that many variations on this sort of design are possible and it is the concept of elimination of the apex opening that is important and that it is necessary to reduce somewhat the barrel bore diameter to do so. Figure 8 shows a cross section of a non-intermeshing twin screw barrel section (30) fit with a pair of plugs (32) and (34) that are held in place through the use of two or more bolts (36) and (38). The plugs (32) and (34) are inserted into an opening (not shown) in the barrel section (30) from the top and bottom, forming the closed apex (40). The plugs rest on lips (42) and (44) that mate to the barrel section. The lips (42) and (44) (Figure 9) keep the bores formed by the plugs centered along the major axis of the barrel bores. Figure 10 shows the top view of the bottom plug, showing again the lips (42) and (44) for the barrel support and also the cross sections of the barrel bores at three locations along the plug. It is clear from Figure 10 that the plugs will close off the apex when in place, and are easily extractable for removal of the screws when the screws are inside the machine, and is easily installable after the screws have been installed inside the machine.

The diameter of the twin screws in the communicating section of the bores may differ from the diameter of the portion of the twin screws in the non-communicating portion of the bores. This difference may be expressed by having a different flight diameter on the portion of the screws which are disposed within the non-communicating bores then the flight diameter of the screws which are in the communicating portions of the bores. The difference in the diameters of the bores are limited only by practical considerations, such as the size of the extruder.

The differing flight diameters are also only limited by the size of the bores, whether communicating or non-communicating.

The apparatus of this invention is particularly effective to maintain high differences in hydrostatic pressure in an upstream zone as opposed to the hydrostatic pressure in the downstream zone.

In practicing the process of this invention, material is introduced, through an inlet into a reaction or mixing zone of an extruder which has twin screw non-intermeshing co or counter rotating screws. The screws are arranged parallel or tangential to one another. Flow restriction means are present and serve to separate the mixing or reaction zone from a lower pressure zone which is downstream of the flow restricting means. The material in the reaction or mixing zone is moved into a zone where the material on one screw cannot mix with the material on another screw. By this is meant, that the material being treated is introduced into a section of the extruder, wherein the bores are non-communicating. Because the bores are non-communicating, it is impossible for material in one bore to mix with material in another bore. The material may then be fed into another section which has communicating bores and then into a further section which has non-communicating bores and then discharged.

If desired, a bypass valve (not shown) may also be included to serve to adjust the pressure between one zone and a downstream zone. This bypass valve may be controlled by an operator so that pressure is easily adjusted to conform to what is desired.

The bypass channel can itself be fitted with a means, such as an externally operated valve, to adjust the proportion of the volume of fluid flowing through the bypass channel to the volume of fluid flowing through the barrel bore and around and between the flow restricting means. This external adjustment allows the operator to adjust the pressure drop between the upstream and downstream zones independent of the screw and current operating conditions.

In order to more fully illustrate the nature of this invention and the manner of practicing the same, the following Examples are presented.

While this invention has been described in terms of certain preferred embodiments and illustrated by means of specific examples, the invention is not to be construed as limited except as set forth in the following claims.

### Example 1 (Comparative):

The purpose of this Example is to illustrate the pressure drop achieved over a melt seal isolating a high pressure zone from a low pressure zone using conventional barrel design and seal technology.

A laboratory extruder consisting of a 0.8 inch bore diameter, non-intermeshing, counter-rotating twin screw extruder having a nip opening between the two parallel bores that is 0.312 inches high, and centered vertically along the plane created by the two bore axes is used to test the seal design. The screw configuration used in the test consists of a pair of matched (flights aligned) single lead, 0.610 inch root diameter, 0.806 inch flight diameter, square pitched screws with flight widths of 0.10 inches followed by a pair of cylindrical compounders with an outer diameter of 0.780 inches and a length of 1.2 inches. The cylindrical compounders are followed by another pair of matched screws of identical design to the upstream pair. The clearance between the seal and the barrel wall is 0.016 inches.

The barrel section is equipped with three pressure probes mounted at the top of the nip, the bottom of the nip and on the side of the right hand barrel bore; with all three probes in the same plane which is perpendicular to the major axes of the screws. The plane of the pressure probes falls at the upstream edge of the melt seal, allowing monitoring of the pressure at its highest point.

A test fluid consisting of polybutene (Amoco H-1500, viscosity of 3026-3381 cSt at 38°C, average molecular weight via vapor phase osmometer of 2060, and a density of 7.53 lbs/gallon) was supplied to the extruder at rates shown below:

| Feed Rate (grams/min) | Melt Temperature (°C) | Screw Speed (RPM) | Measured Pressure (psi) |
|---|---|---|---|
| 7.8 | 38.6 | 40 | 35.6 |
| 12.0 | 40.0 | 40 | 51.7 |
| 5.23 | 26.0 | 36 | 31.6 |

### Example 2 (Comparative):

All barrel dimensions and screw dimensions are the same as listed in Example 1. The compounder diameter is increased from 0.780 inches to 0.790 inches, reducing the clearance between compounder surface and barrel wall to 0.011 inches. The upstream screws and downstream screws remain the same.

Again a fluid consisting of polybutene (Amoco H-1500) was supplied to the extruder at a rate of 5.23 grams/minute. A melt temperature of 40.9 C was measured via a thermocouple in the same plane as the pressure probes. The screws were rotated at 35 rpm. A pressure of 40.7 psi was measured at the melt seal.

### Example 3:

The purpose of this Example is to illustrate the pressure drop achieved over a melt seal isolating a high pressure zone from a low pressure zone using the closed nip design discussed in this patent.

A laboratory extruder consisting of a 0.8 inch bore diameter, non-intermeshing, counter-rotating twin screw extruder having a nip opening between the two parallel bores that is 0.312 inches high, and centered vertically along the plane created by the two bore axes is fitted with a special section of reduced barrel bore diameter and with no nip present between the channels that is 1.2 inches in length. The closed nip region consists of two parallel bores of 0.780 inches in diameter, lying on the same axes as the original bore diameters. The nip is closed off, leaving a wall thickness of 0.032 inches between the bores. The screw configuration used in the test consists of a pair of matched (flights aligned) single lead, 0.610 inch root diameter, 0.806 inch flight diameter, square pitched screws with flight widths of 0.10 inches leading up to the closed nip region of the barrel. Within the closed region of the barrel are a pair of cylindrical compounders with an outer diameter of 0.748 inches and a length of 1.2 inches, leaving a barrel wall to compounder surface clearance of 0.016 inches as in the case of the first comparative example. The cylindrical compounders are followed by an open discharge.

The barrel section is equipped with three pressure probes mounted at the top of the nip, the bottom of the nip and on the side of the right hand barrel bore; with all three probes in the same plane which is perpendicular to the major axes of the screw. The plane of the pressure probes falls at the upstream edge of the melt seal, 0.2 inches before the beginning of the closed nip region.

A test fluid consisting of polybutene (Amoco H-1500) was supplied to the extruder at rates shown below:

| Feed Rate (grams/min) | Melt Temperature (°C) | Screw Speed (RPM) | Measured Pressure (psi) |
|---|---|---|---|
| 8.0 | 38.1 | 40 | 50.9 |
| 12.0 | 42.0 | 40 | 75.3 |
| 5.0 | 25.3 | 35 | 46.2 |

In each case, for roughly equivalent feed rates, screw speeds and melt temperatures, the closed nip barrel section created a substantially higher pressure drop.

## Claims

1. An apparatus for treating material fed therein comprising a housing having two congruent bores extending through said housing, an inlet extending through said housing and into at least one of said congruent bores, a pair of non-intermeshing parallel or tangential co or counter rotating twin screws, each disposed within one of said bores, means connected operably to said screws for turning said screws, said screws having flow restricting means disposed on each of said screws, said bores communicating with one another for less than the full length of the bores and being non-communicating with one another for the remainder of the length of the bores, and an outlet in said apparatus for discharging material fed to and worked in said apparatus.

2. An apparatus according to Claim 1, wherein the non-communicating portion of the bores is discontinuous along the length of the bores.

3. An apparatus according to Claim 1, wherein the communicating portion of the bores are of differing bore diameters.

4. An apparatus according to Claim 1, wherein the diameter of the twin screws in the communicating section of the bores differs from the diameter of the portion of the twin screws in the non-communicating portion of the bores.

5. An apparatus according to Claim 4, wherein the root diameter of the screws is the same along the entire length of the screws.

6. An apparatus according to Claim 1, wherein there is present a zone upstream of the non-communicating bores and a zone downstream of the non-communicating bores, and the zone upstream of the non-communicating bores is a zone of higher pressure than the zone downstream of the non-communicating bores.

7. An apparatus according to Claim 6, wherein the hydrostatic pressure in the upstream zone is greater than the hydrostatic pressure in the downstream zone.

8. A process for treating material in an extruder comprising the steps of introducing material into a reaction or mixing zone of an extruder having twin non-intermeshing co or counter rotating screws arranged parallel or tangential to one another and flow restriction means separating the mixing or reaction zone from a lower pressure zone downstream of the flow restricting means, moving material from the reaction or mixing zone into a zone where material on one screw cannot mix with material in the other screw because of non-communicating screw bores, and discharging material from said extruder through a discharge outlet.
